Europäisches Patentamt

European Patent Office

Office européen des brevets

(11) Publication number: **0 164 908**
**B1**

# EUROPEAN PATENT SPECIFICATION

(45) Date of publication of patent specification: **13.09.89**

(51) Int. Cl.⁴: **A 01 N 61/00, C 05 F 11/02**

(21) Application number: **85303362.9**

(22) Date of filing: **13.05.85**

(54) Process for preparation of compositions for modifying plant growth; composition for plant growth modification: and method for the use thereof.

(30) Priority: **14.05.84 US 609778**

(43) Date of publication of application:
**18.12.85 Bulletin 85/51**

(45) Publication of the grant of the patent:
**13.09.89 Bulletin 89/37**

(84) Designated Contracting States:
**DE FR GB IT NL SE**

(56) References cited:
**AU-B- 509 782**
**US-A-3 398 186**
**US-A-4 425 149**

**CHEMICAL ABSTRACTS, vol. 78, no. 3, 22nd
January 1973, page 303, no. 14965r, Columbus,
Ohio, US; M. ORTIZ DE SERRA et al.:
"Extraction of humic acid by alkali and
chelating resin"**

(73) Proprietor: **ACTAGRO, INC.**
**4111 N. Motel Drive Suite 101**
**Fresno California 93722 (US)**

(72) Inventor: .**Marihart, John R.**
**Pacific Micro Minerals Inc. 4111 North Motel
Drive**
**Fresno California 93711 (US)**

(74) Representative: **Wilkinson, Stephen John et al
c/o Stevens, Hewlett & Perkins 5 Quality Court
Chancery Lane
London WC2A 1HZ (GB)**

(56) References cited:
**CHEMICAL ABSTRACTS, vol. 80, no. 5, 4th
February 1974, page 103, no. 23447s,
Columbus, Ohio, US; R.W. O'DONNELL:
"Auxin-like effects of humic preparations from
leonardite", SOIL SCI. 1973, 116(2), 106-12**

Courier Press, Leamington Spa, England.

## EP 0 164 908 B1

**Description**

The present invention relates to novel processes for the preparation of compositions for modifying plant vegetative growth and fruiting, and to the compositions produced by such processes. The present invention further relates to the method for the use of the compositions in stimulating the growth of plants. The present invention more particularly relates to processes for preparing aqueous humic acid based compositions from leonardite ore, the humic acid based compositions prepared thereby, and the use of such compositions to modify vegetative growth and fruiting of the plants to which they are applied.

Leonardite ores have long been known to be sources of organic materials adapted for use as soil and foliar additives having application in the regulation of plant growth. In particular, leonardite ore is recognized as a primary source for a wide variety of humates and humic acids. A wide variety of processes have been proposed for the extraction of the humic fractions from leonardite ore for use of the compositions so extracted in treating plants to modify plant vegetative growth and fruiting and the uptake of nutrients by plants so treated.

Leonardite ore is believed to be an oxidized form of lignite ore, which is, in effect, a precursor to leonardite ore in the biochemical and chemical pathways of natural leonardite synthesis. Hence, it is recognized that any mined sample of leonardite ore-bearing earth is expected to contain at least some lignite ore, as well as a plurality of organic and inorganic impurities. Accordingly, as used herethroughout, the term "leonardite ore" will be understood as referring to ore samples inclusive of lignite as well.

Further, it is understood that many known processes for extracting humic acids and humates from leonardite ore actually result in the extraction of fulvic and phenol carboxylic fractions as well. It is, accordingly, to be recognized that the term "humic acid", as used herein, is not intended to be construed as excluding the possibility of the presence of fulvic acids and phenol carboxylic acids in fractions and compositions extracted and produced by known processes or the processes disclosed herein.

Relevant prior art disclosures include U.S. 4,425,149, Kimbro, which relates to a method of making a dry compound containing chelated micronutrients and to a method of making the chelating agent. Chemical Abstracts, Volume 78, No. 3, item 14956R refers to an article which pertains to humic acid extraction from soils with sodium hydroxide, which is the classical method of extracting humic acid.

U.S. 3,398,186, Schwartz teaches the extraction of humic acid from leonardite with an aqueous solution of a sulfite salt and the article referred to in Chemical Abstracts Volume 80, No. 5, item 23447s, discusses the effects of humic acid and leonardite in stimulating plant growth.

Finally, Australian Patent B 509,782 relates to treatment of a humus or humic acid containing material with urea, an oxidizing agent, and an alkali other than ammonia.

While many of the humic acid products prepared using known techniques of extraction from leonardite ore have been effective to one degree or another in stimulating plant growth when applied thereto, the response of various plants to the application thereon of such compositions has proven to be inconsistent. Further, some known processes for extracting humic acid products and compositions for leonardite ore result in the production of compositions having limited stability against degradation and consequently having limited shelf lives whereby storage thereof for protract periods prior to application to plants and soil results in a significant diminishment of the effectiveness of the composition.

Moreover, few such compositions prepared by known processes have been known to effectively increase both vegetative growth and fruiting in a variety of plants and most of such beneficial effects obtained by applying compositions prepared conventionally have been inconsistent and ephemeral.

Therefore, it has long been known that it would be desirable to have a process for extracting humic acids from leonardite ore which would result in the preparation of a product or composition which is capable of being stored for protracted periods of time without substantial degradation thereof or diminishment of the effectiveness thereof for use in stimulating and regulating plant growth. Further, it has been recognized that there is a need in agriculture for such products and preparations, the use of which is capable of increasing both the vegetative growth of plants on which it is applied, as well as the fruiting thereof. Moreover, it has been known that it would be desirable to have such a product and a method for the use thereof which finds application in modifying the vegetative growth and fruiting of a wide variety of crops with substantially consistent and repeatable results in a wide variety of ecological condition.

The present invention provides a process of preparing a humic acid based plant growth composition, comprising the steps of:

a) reacting an organic chelating agent with leonardite ore in an aqueous liquid medium at a temperature in the range of from 170°F (77°C) to 225°F (107°F).

b) mixing said aqueous medium, leonardite ore and said organic chelating agent for a period of time sufficient to permit reaction to effect a separation thereof into a liquid composition for modifying plant growth and a solid phase of excess solid matter; and

c) removing said excess solid matter from said liquid composition.

The preferred processes disclosed herein are capable of reliably and consistently producing compositions having high stability against degradation and which are capable of being stored for protracted periods of time without degradation thereof. The plant growth regulator and a method for the use thereof disclosed herein can be employed dependably and in a manner fully compatible with other agricultural and manufacturing practices and are well suited for use on a wide variety of annual and

2

perennial plants and are particularly well suited for use on cotton, grape, olive and tomato plants. The preferred plant growth modifier and method disclosed herein can be employed in conjunction with conventional fertilizers, growth regulators, and equipment for the application thereof without diminishment of the beneficial effect of either the plant growth modifier and method of the present invention, or that of the conventional plant growth regulators, fertilizers, or methods.

These and other features and advantages will become apparent by references to the accompanying descriptions.

I. Process for preparing plant growth stimulating compositions and products prepared thereby.

The process disclosed herein is adapted for use in the extraction of a variety of humic acids and humic acid derivatives by the reaction of organic chelating agents with leonardite ore. Preferably, leonardite ore having a relatively high humic acid content, such as that commonly mined in North Dakota having humic acid contents as high as 80% by weight, is used in practicing the process of the present invention. However, inasmuch as the process herein described is believed to extract a fairly specific spectrum or fraction of humic acids out of the overall number of humic acids present in the leonardite ore, comprising perhaps as little as 8 to 10% by weight of the total humic acid content of the ore, it will be recognized that the percentage by weight of humic acids in a given ore sample, and the origin of the ore sample, are not to be considered controlling or limiting in the practice of the described process.

Leonardite ore, preferably crushed prior to use thereof, is reacted in an aqueous medium in the presence of one or more organic chelating agents. Representative of the organic chelating agents adapted for use in carrying out the processes of the present invention are sodium gluconate; sodium glucoheptonate; sodium citrate; sodium tartarate; sodium glucarate; sodium glucamine; sodium glutarate; sodium tartronate; sodium glutamate; potassium gluconate; potassium glucoheptonate; potassium citrate; potassium tartarate; potassium glucarate; potassium glucamine; potassium glutarate; potassium tartronate; potassium glutamate; ammonium gluconate; ammonium glucoheptonate; ammonium citrate; ammonium tartarate; ammonium glucarate; ammonium glucamine; ammonium glutarate; ammonium tartronate; and ammonium glutamate. The organic chelating agents serve as reactants and, possibly, as means for limiting the potentially deleterious effects of the presence of otherwise free metal ions in the resulting composition. Preferably, the pH of the resultant aqueous composition of extracted humic acid derivatives is then adjusted to stabilize the composition against degradation and to provide a prolonged potential shelf life. In a modified form of the process of the present invention, the composition derived by the reaction of leonardite ore with organic chelating agents is blended with a humic acid composition prepared by the reaction of leonardite ore with potassium hydroxide or sodium hydroxide. In a further modification of the subject process, the composition is enhanced as to nutritive value by the introduction of nitrogen, phosphorous, potassium and other nutrients.

While the exact make-up of the compositions of the present invention produced by the processes hereof are unknown and have resisted analysis, they are known to produce a simulated hormonal effect, or to stimulate a hormonal response, in plants to which they are applied.

In order to disclose the process still more clearly, attention is invited to the following illustrative examples. It is understood, however, that these examples are merely illustrative and that the subject invention is not to be limited to the specific conditions or details set forth. In the following examples, all parts are by weight, unless otherwise indicated.

Example I

9 parts (by weight) of leonardite ore is introduced into 75 parts of water previously heated, preferably, to a temperature in a range of about 170°F (77°C) to 190°F, (88°C), but not exceeding 225°F (107°C). 15 total parts by weight of sodium gluconate is then added and the resultant mixture is mixed for 5 hours to permit complete reaction. After mixing, the mixture is pumped to a settling tank for 24 hours to 7 days to separate into liquid and solid phases, after which the supernatant, partially separate liquid phase, containing the subject composition, is pumped to standard cone tanks for 3 to 7 days for further settling. The settled liquid composition is pumped to a mixer and adjusted therein to pH of 12.5 or higher by the addition of concentrated sodium hydroxide or potassium hydroxide. The resultant aqueous composition is then adapted to be stored for periods of at least one year prior to use thereof without significant degradation or loss of effectiveness. Optionally, the composition can be used at extracted pH range which can vary from 4.5 to 6.5, depending upon the dielating agent used.

Example II

The process described in Example I is repeated and the resultant composition, hereinafter designated as "Composition A", is mixed with a liquid composition, hereinafter designated as "Composition B", produced by the process described immediately below.

In preparing Composition B, about 72 to 74 parts (by weight) of water is heated to at least 180°F (82°C). Preferably, the water temperature is about 200°F (93°C). About 20 to 22 parts of leonardite ore is added to the water and blended for about 1/2 hour. 5 parts of potassium hydroxide or sodium hydroxide is added to the water to raise the pH to about 11.00, and mixed for a period of about 2 to 5 hours. Thereafter, one part of hydrogen peroxide is added. The liquid composition is permitted to settle, and excess solid matter is removed.

About 50 parts of Composition B are added to about 12.5 parts of Composition A in about 37.5 parts of water. The resultant mixture is mixed or blended for a period sufficient to produce a substantially homogeneous mixture. The pH is adjusted to about 12.0 by the addition of sodium hydroxide or potassium hydroxide. The mixture, hereinafter designated as "Composition C", is again blended to ensure homogeneity.

It is believed that the presence of positive ions and ammonia are detrimental to the effects of the resultant composition on plant growth, and more particularly on plant fruitage, and therefore it is important that care be taken in preparation and use of the composition produced by the process of this example to avoid the introduction of ammonia or dissociable metal salts into the mixture.

Example III

About 14 parts of Composition A, 9 parts Composition B, 33.1 parts of phosphoric acid, 11.9 parts potassium hydroxide, 6.2 parts ammonia, 18.3 parts of water, 3.6 parts of zinc, 2.5 parts of iron, and 1.4 parts of manganese are mixed to produce a composition, hereinafter designated as "Composition D", having as active ingredients humic acids, potassium phosphate, ammonium phosphate and the aforementioned minor nutrients. The resultant composition is one having a positive effect on the rate of vegetative growth and fruiting of plants to which it is applied and which also provides essential nitrogen, phosphorous and potassium nutrients, the need for which increases with the accelerated growth. In particular, Composition D provides relatively high levels of phosphates which are essential to plants during fruiting.

The foregoing examples are illustrative of the processes of the present invention capable of producing compositions having beneficial effects on plant vegetative growth and fruiting and the percentages of the reactants used are representative rather than controlling.

II. Method for use of plant growth stimulating compositions

In accordance with the subject invention, plants are treated with single or multiple applications of an effective amount of the plant growth modifying compositions produced by the processes hereof diluted as necessary for selected rates of application thereof. In general, the compositions are most effective if applied on annual crops prior to irrigation or prior to or simultaneously with bloom initiation. On perennial crops, the compositions are best applied immediately prior to or after harvest or, during dormancy, at least one month before the plant enters a vegetative cycle. Soil or foliar applications are effective. As described previously, the effect of the compositions on the growth of plants to which they are applied is, in many cases, hormonal or quasihormonal in nature.

The products are compatible with many fertilizers as well as growth regulators which are adapted to restrict growth, such as the growth regulator commercially available as a watersoluble composition under the trademark "PIX", containing on a weight basis 4.2% N,N-dimethyl piperidinium chloride (hereinafter designated as "PIX") and 95.8% inert ingredients.

The compositions produce noticeable and consistent increases in vegetative and fruiting growth on a wide variety of plants, particularly when applied at a stress point in the crop cycle and particularly at such stress times as the harvest period and those relating to the watering of the plants, although the timing of applications relating to water-stress periods in the plants' growth cycle is not believed as critical for perennial crops as for annual crops. However, if the compositions are applied to plants which are in a vegetative state, the results of such application will be minimally effective or inconsistent.

In order to disclose the method of the subject invention still more clearly, attention is invited to the following illustrative examples. It is understood, or course, that these examples are merely illustrative and that the invention is not to be limited to the specific conditions or details set forth. In the following examples, all parts are by weight unless otherwise indicated.

Example I

Effects of the composition designated as Composition D on cotton plants growing in California were experimentally determined and the results are summarized in Table I below. The cotton, which was of a variety commercially denominated as "SJ2", was grown on 30-inch beds in soil having a type characterized as "oxalis silty clay" with pH in the range of from 7.6 to 7.7 to a depth of one foot.

The test was conducted in three trials denominated Trials, 1, 2 and 3, respectively, and the trials were compared against a fourth trial denominated Trial 4, which served as a control. The cotton fields in which the cotton was grown were divided into plots.

4

TABLE I

| Trial | Rate of application of compound D/timing of application | Rate of application of PIX/timing of application | Replication— yield (lb/plot) | % of Yield of control |
|---|---|---|---|---|
| 1 | 3 Quarts/Acre 10 Days Before Bloom (July 7) | 0.5 Pints/Acre 30% Bloom (July 23) | 1—2100 2—1960 3—1720 4—1900 ——— Avg.—1920 | 107% |
| 2 | 3 Quarts/Acre First Bloom (July 15) | 2/3 Pints/Acre First Bloom (July 15) | 1—2090 2—1740 3—1990 4—1810 ——— Avg.—1908 | 106% |
| 3 | 3 Quarts/Acre First Bloom (July 15) | 1/2 Pint/Acre Full Bloom (July 23) | 1—1920 2—2010 3—2000 4—2110 ——— Avg.—2010 | 112% |
| 4 (Control) | 0 | 0 | 1—1840 2—1760 3—1700 4—1880 ——— Avg.—1795 | 100% |

The plots in all trials were irrigated on the same dates, as follows:

First irrigation   —June 22.
Second irrigation—July 24.
Third irrigation  —August 8.

In each trial, including Trial 4, which was the control, the seeds were treated with a commercially-available conventional fungicide. In Trial 1, the seeds were treated prior to planting with both a fungicide and Composition C, applied as by spraying. The seeds in Trials 2 and 3 received fungicide treatment only.

It will be apparent upon a review of the data of Table I, that the plants treated with Composition D in Trials 1, 2 and 3 evidenced a substantial increase in crop yield over those plants grown without such application in Trial 4.

Example II
The effect of Composition A on several different varieties of grape was experimentally tested and the results are set forth in Table II below. 160 acres of each variety were treated by the soil application of Composition A and the results of such treatment were compared with the yield of 160 acres of the same variety of grape, located in the same vineyard, but left untreated, to serve as a control. The application of Composition A in each case was in early February, which is a dormant period in the growth cycle of the grapevines.

TABLE II

| Variety | 5-Year yield average (tons/acre) | 1983 Yield | Rate of application composition A |
|---|---|---|---|
| (Treated) Barbera | 8.50 | 9.40 | 1 Pint/Acre |
| (Control) Barbera | 8.60 | 9.10 | — |
| (Treated) Grenache | 15.90 | 17.20 | 1 Quart/Acre |
| (Control) Grenache | 16.00 | 10.90 | — |
| (Treated) Chenin Blanc | 10.80 | 9.60 | 1 Pint/Acre |
| (Control) Chenin Blanc | 10.30 | 7.40 | — |

In Table II, the average yields of grapes in tons per acre for the five-year period preceding the year in which the test was conducted is set forth for both the treated and untreated acres. Each variety of grape received a single application. The yield in tons per acre of the treated acres of each variety was greater than that of the controlled acreage of each variety.

Example III

160 acres of grapevines of each of the varieties listed in Table III below were treated with Composition C at the rate indicated. Again, each 160 acre tract of grapevines treated was compared with 160 acres of untreated grapevines in the same vineyard and of the same variety, left untreated to serve as a control. The vines of the treated acreage received a single application of Composition C in early February during the dormant period in the vegetative cycle of the vines.

TABLE III

| Variety | 5-Year yield average (tons/acre) | 1983 Yield tons/acre | Rate of application Composition C Compositions (A&B) |
|---|---|---|---|
| (Treated) Semillon | 8.72 | 10.40 | 1 Quart Composition A+ 1 Quart Composition B/Acre |
| (Control) Semillon | 8.40 | 9.40 | — |
| (Treated) Ruby Cabernet | 7.50 | 7.70 | 1 Pint Composition A+ 1 Quart Composition B/Acre |
| (Control) Ruby Cabernet | 7.50 | 5.00 | — |
| (Treated) Emerald Riesling | 9.80 | 6.20 | 1 Pint Composition A+ 1 Quart Composition B/Acre |
| (Control) Emerald Riesling | 9.70 | 5.50 | — |

As did the application of Composition A, set forth in Table II in Example II, the applications of Composition C, the results of which are set forth immediately above in Table III, provided a greater crop yield per acre than was obtained from the untreated acreage. It was also experimentally observed that the vines of the treated acreage had a much more rapid and voluminous vegetative growth and an earlier date of maturity.

Example IV

Olives of the Ascolino and Manzanillo varieties were treated with Composition D and the results of such treatment are set forth in Table IV. The applications of Composition D were made by foliar spraying.

Both the Manzanillo and, to a lesser extent, the Ascolino varieties of olive, are cyclical or alternate in their seasonal bearing of olives. That is, normally, in one of each pair of succeeding years of growing seasons, the trees of each variety will produce at a depressed level relative to the other of such succeeding pairs of years. The trees of the control group of each variety produced significantly lower yields of olives in the year in which the test was conducted as compared to the preceding year, during which none of the trees were treated. The trees each received a single application.

6

TABLE IV

| Trial | Variety | Acres treated | Yield (tons/acre) in test year | Yield (tons/acre) preceding year untreated | Timing of application |
|---|---|---|---|---|---|
| 1 | Manzanillo | 17 | 2.84 | 7.9 | Post Harvest (Fall Treatment) |
| 2 | Manzanillo | 11.5 | 1.69 | 7.5 | Spring Treatment |
| 3 | Ascolino | 8 | 6.02 | 7.4 | Spring Treatment |
| 4 | Manzanillo | (Control-10 acres untreated) | 1.26 | 4.9 | — |
| 5 | Ascolino | (Control-10 acres untreated) | 3.61 | 7.3 | — |

Example V

Composition D was tested on plots of cotton in combination with PIX for comparison of the effects of such application with the yield obtained applying PIX alone, and also with a control field left untreated.

TABLE V

| Trial | Volume/acre PIX applied | Volume/acre Composition D applied | Yield (lbs. seed cotton/acre) (avg. 4 replications) | Time of application |
|---|---|---|---|---|
| 1 | 1 Pint | 2 Quarts | 3597 | First Bloom |
| 2 | 1 Pint | 0 | 3382 | First Bloom |
| 3 (Control) | 0 | 0 | 3382 | — |

Each trial was replicated four times and the yield of seed cotton per acre for each trial represents the average of the yields of the four replications.

The cotton plants treated with the combination of PIX and Composition D were approximately six inches taller, on the average, than the plants treated solely with PIX. No delay in maturity of the cotton was observed.

Example VI

Varying rates of application of PIX and PIX plus Composition D were tested against control plots of cotton to determine the relative effects on the yields of cotton plants so treated. The results are summarized in Table VI below.

TABLE VI

| Trial | Volume PIX per acre | Volume Composition D per acre | Average yield, lbs. of seed cotton per acre (4 replications) |
|---|---|---|---|
| 1 | 3/4 Pints | 0 | 3413 |
| 2 | 1/2 Pints | 0 | 3506 |
| 3 | 3/4 Pints | 5 Pints | 3610 |
| 4 | 1/2 Pints | 5 Pints | 3733 |
| 5 | 0 | 0 | 3642 |

Each trial was replicated four times and the yield of seed cotton per acre for each trial represents the average yield of the four replications.

Again, the growth pattern of the plants treated with Composition D in combination with PIX showed an average increase in height of approximately six inches, again with no delay in the maturity of the cotton. The yields obtained from the application of Composition D in combination with PIX resulted in significantly larger yields than those using PIX alone. However, it is noted that the yields of the control group were also significantly higher than the groups on which PIX alone was applied.

Thus, it is seen that a process for producing a plant growth modifying composition, and a method for the use thereof, useful in modifying both vegetative and fruiting growth in annual and perennial plants and compatible with conventional agriculture methods, materials, and practices, have been disclosed herein.

While the composition and method disclosed herein are described in terms of particular ingredients, and ranges thereof, to be used, it is obvious that modifications and variations in the nature and proportions of the ingredients may be made without departing from the spirit and scope of the invention, which is not to be limited to the illustrative details disclosed.

**Claims**

1. A process of preparing a humic acid based plant growth composition, comprising the steps of:

a) reacting an organic chelating agent with leonardite ore in an aqueous liquid medium at a temperature in the range of from 170°F (77°C) to 225°F (107°C).

b) mixing said aqueous medium leonardite ore and said organic chelating agent for a period of time sufficient to permit reaction to effect a separation thereof into a liquid composition for modifying plant growth and a solid phase of excess solid matter; and

c) removing said excess solid matter from said liquid composition.

2. The process according to claim 1, further comprising the steps of pre-heating said aqueous reaction medium to said temperature; and then introducing said leonardite ore and said organic chelating agent into the aqueous medium for reaction of the leonardite ore and organic chelating agent.

3. The process according to claim 1 or claim 2, wherein the organic chelating agent is selected from sodium gluconate, sodium glucoheptonate, sodium citrate, sodium tartronate, sodium glucarate, sodium glucamine, sodium glutarate, sodium tartronate and sodium glutamate.

4. The process according to claim 1 or claim 2, wherein the organic chelating agent is selected from potassium gluconate, potassium glucoheptonate, potassium citrate, potassium tartarate, potassium glucarate, potassium glucamine, potassium glutarate, potassium tartronate and potassium glutamate.

5. The process according to claim 1 or claim 2, wherein the organic chelating agent is selected from ammonium gluconate, ammonium glucoheptonate, ammonium citrate, ammonium tartarate, ammonium glucarate, ammonium glucamine, ammonium glutarate, ammonium tartronate and ammonium glutamate.

6. The process according to any one of claims 1 to 5, further comprising adjusting the pH of the liquid composition to at least 12.5 by the addition of a base thereto.

7. The process according to claim 6, wherein the base is selected from sodium hydroxide and potassium hydroxide.

8. The process according to any one of claims 2 to 7, wherein said leonardite ore is first added in crushed form to the aqueous reaction medium; and said organic chelating agent is then added.

9. The process according to any one of claims 2 to 8, further comprising combining the liquid composition with a second liquid composition prepared by the process of reacting leonardite ore in a heated aqueous medium with a member selected from potassium hydroxide and sodium hydroxide; adding hydrogen peroxide to the aqueous medium; and removing excess solid matter to yield the second liquid composition.

10. The process according to claim 9, wherein said second liquid composition is prepared by the process of heating a quantity of water to a temperature in the range from 180°F (82°C) to 200°F (93°C) to provide a heated aqueous reaction medium; adding leonardite ore to the reaction medium to provide a reaction mixture; blending the reaction mixture; introducing a base selected from potassium hydroxide and sodium hydroxide to the blended reaction mixture; introducing hydrogen peroxide to the reaction mixture; permitting the reaction mixture to settle; and removing excess solid matter, with the remaining liquid being the second liquid composition.

11. The process according to claim 10, further comprising adding phosphoric acid, potassium hydroxide, ammonia, water, zinc, iron and manganese to the liquid composition.

12. The process according to any one of claims 9 to 11, further comprising the step of adjusting the pH of the liquid composition to at least about 12.5.

13. A composition produced in accordance with the process of any one of the preceding claims.

14. A method of modifying the growth of plants comprising applying to the plants any one of the compositions of claim 13 in an amount effective to modify the growth of the plants.

**Patentansprüche**

1. Verfahren zum Herstellen einer Pflanzenwachstumszusammensetzung auf Basis Huminsäure mit den Verfahrensstufen:

a) Umsetzen eines organischen Chelatbildners mit Leonarditerz in einem wässrigen Flüssigmedium bei einer Temperatur in dem Bereich von 170°F (77°C) bis 225°F (107°F);

b) Mischen des wässrigen Mediums aus Leonarditerz und organischen Chelatbildner über einen zur Reaktion ausreichenden Zeitraum, um eine Trennung in eine flüssige Zusammensetzung zur Modifizierung des Plfanzenwachstums und in eine feste Phase überschüssigen Feststoffs zu bewirken; und

c) Entfernen des überschüssigen Feststoffs aus der flüssigen Zusammensetzung.

2. Verfahren nach Anspruch 1, gekennzeichnet weiter durch die Verfahrensstufen des Vorwärmens des wässrigen Reaktionsmediums auf diese Temperatur und anschließendes Einführen des Leonarditerzes und des organischen Chelatbildners in das wässrige Medium zur Reaktion des Leonarditerzes und des organischen Chelatbildners.

3. Verfahren nach Anspruch 1 oder 2, worin der organische Chelatbildner aus Natriumgluconat, Natriumglucoheptonat, Natriumcitrat, Natriumtartrat, Natriumglucarat, Natriumglucamin, Natriumglutarat, Natriumtartronat und Natriumglutamat ausgewählt ist.

4. Verfahren nach Anspruch 1 oder 2, worin der organische Chelatbildner aus Kaliumgluconat, Kaliumglucoheptonat, Kaliumcitrat, Kaliumtartrat, Kaliumglucarat, Kaliumglucamin, Kaliumglutarat, Kaliumtartronat und Kaliumglutamat ausgewählt ist.

5. Verfahren nach Anspruch 1 oder 2, worin der organische Chelatbildner aus Amoniumgluconat, Amoniumglucoheptonat, Amoniumcitrat, Amoniumtartrat, Amoniumglucarat, Amoniumglucamin, Amoniumglutarat, Amoniumtartronat und Amoniumglutamat ausgewählt ist.

6. Verfahren nach einem der Ansprüche 1 bis 5, gekennzeichnet weiter durch Einstellen des pH-Werts der flüssigen Zusammensetzung auf wenigstens 12,5 durch die Zugabe einer Base.

7. Verfahren nach Anspruch 6, worin die Base aus Natriumhydroxid und Kaliumhydroxid ausgewählt ist.

8. Verfahren nach einem der Ansprüche 2 bis 7, worin das Leonarditerz zuerst in zerkleinerter Form dem wässrigen Reaktionsmedium und dann der organische Chelatbildner zugesetzt werden.

9. Verfahren nach einem der Ansprüche 2 bis 8, weiter gekennzeichnet durch Kombinieren der flüssigen Zusammensetzung mit einer zweiten flüssigen Zusammensetzung, welche durch das Verfahren der Umsetzung von Leonarditerz in einem erwärmten wässrigen Medium mit einem Bestandteil ausgewählt aus Kaliumhydroxid und Natriumhydroxid, Zugabe von Wasserstoffperoxid zu dem wässrigen Medium und Entfernen überschüssigen Feststoffs unter Erhalt der zweiten flüssigen Zusammensetzung hergestellt worden ist.

10. Verfahren nach Anspruch 9, worin die zweite flüssige Zusammensetzung durch das Verfahren des Erwärmens einer Menge von Wasser auf eine Temperatur in dem Bereich von 180°F (82°C) bis 200°F (93°C), um ein erwärmtes, wässriges Reaktionsmedium bereitzustellen, Zugabe von Leonarditerz zu dem Reaktionsmedium, um eine Reaktionsmischung bereitzustellen, Mischen der Reaktionsmischung, Einführen einer aus Kaliumhydroxid und Natriumhydroxid ausgewählten Base in die gemischte Reaktionsmischung, Einführen von Wasserstoffperoxid in die Reaktionsmischung, Absetzenlassen der Reaktionsmischung und Entfernen überschüssigen Feststoffes hergestellt wird, wobei die verbleibende Flüssigkeit die zweite flüssige Zusammensetzung ist.

11. Verfahren nach Anspruch 10, gekennzeichnet weiter durch die Zugabe von Phosphorsäure, Kaliumhydroxid, Ammoniak, Wasser, Zink, Eisen und Mangan zu der flüssigen Zusammensetzung.

12. Verfahren nach einem der Ansprüche 9 bis 11, gekennzeichnet weiter durch die Verfahrensstufe des Einstellens des pH-Wertes der flüssigen Zusammensetzung auf wenigstens etwa 12,5.

13. Eine durch das Verfahren nach einem der vorhergehenden Ansprüche hergestellte Zusammensetzung.

14. Verfahren zum Modifizieren des Wachstums von Pflanzen durch Anwenden irgendeiner der Zusammensetzungen nach Anspruch 13 auf die Pflanzen in einer wirksamen Menge, um das Pflanzenwachstum zu modifizieren.

**Revendications**

1. Procédé de préparation d'une composition à base d'acides humiques influençant la croissance des plantes, qui comprend les étapes consistant:

a) à faire réagir un agent organique de chélation avec de la léonardite dans un milieu liquide aqueux à une température comprise dans un intervalle de 170°F (77°C) à 225°F (107°C);

b) à mélanger la léonardite en milieu aqueux et l'agent organique de chélation pendant une période suffisante pour permettre au mélange réactionnel de se fractionner en une composition liquide pour modifier la croissance des plantes et en une phase solide formée de matières solides en excès; et

c) à séparer ladite matière solide en excès de ladite composition liquide.

2. Procédé suivant la revendication 1, qui comprend en outre les étapes consistant à préchauffer ledit milieu réactionnel aqueux à ladite température, puis à introduire la léonardite et l'agent organique de chélation dans le milieu liquide en vue de faire réagir la léonardite et l'agent organique de chélation.

3. Procédé suivant la revendication 1 ou 2, dans lequel l'agent organique de chélation est choisi entre le gluconate de sodium, le glucoheptonate de sodium, le citrate de sodium, le tartronate de sodium, le glucarate de sodium, le sel de sodium de la glucamine, le glutarate de sodium, le tartronate de sodium et le glutamate de sodium.

4. Procédé suivant la revendication 1 ou 2, dans lequel l'agent organique de chélation est choisi entre le gluconate de potassium, le glucoheptonate de potassium, le citrate de potassium, le tartrate de potassium, le glucarate de potassium, le sel de potassium de la glucamine, le glutarate de potassium, le tartronate de potassium et le glutamate de potassium.

5. Procédé suivant la revendication 1 ou 2, dans lequel l'agent organique de chélation est choisi entre le gluconate d'ammonium, le glucoheptonate d'ammonium, le citrate d'ammonium, le tartrate d'ammonium, le glucarate d'ammonium, le sel d'ammonium de la glucamine, le glutarate d'ammonium, le tartronate d'ammonium et le glutamate d'ammonium.

6. Procédé suivant l'une quelconque des revendications 1 à 5, qui consiste en outre à ajuster le pH de la composition liquide à au moins 12,5 par addition d'une base à la composition.

7. Procédé suivant la revendication 6, dans lequel la base est choisie entre l'hydroxyde de sodium et l'hydroxyde de potassium.

8. Procédé suivant l'une quelconque des revendications 2 à 7, dans lequel la léonardite est tout d'abord ajoutée sous la forme broyée au milieu réactionnel aqueux, et l'agent organique de chélation est ajouté ensuite.

9. Procédé suivant l'une quelconque des revendications 2 à 8, qui consiste en outre à réunir la composition liquide avec une seconde composition liquide préparée par le procédé de réaction de léonardite en milieu aqueux chauffé avec une substance choisie entre l'hydroxyde de potassium et l'hydroxyde de sodium; à ajouter du peroxyde d'hydrogène au milieu aqueux; et à enlever la matière solide en excès pour obtenir la seconde composition liquide.

10. Procédé suivant la revendication 9, dans lequel la seconde composition liquide est préparée par le procédé qui consiste à chauffer une quantité d'eau à une température comprise dans l'intervalle de 180°F (82°C) à 200°F (93°C) pour former un milieu réactionnel aqueux chauffé; à ajouter de la léonardite au milieu réactionnel pour former un mélange réactionnel; à brasser le mélange réactionnel; à introduire une base choisie entre l'hydroxyde de potassium et l'hydroxyde de sodium dans le mélange réactionnel brassé; à introduire du peroxyde d'hydrogène dans le mélange réactionnel; à laisser le mélange réactionnel se sédimenter; et à enlever la matière solide en excès, le liquide restant constituant la seconde composition liquide.

11. Procédé suivant la revendication 10, qui consiste en outre à ajouter de l'acide phosphorique, de l'hydroxyde de potassium, de l'ammoniac, de l'eau, du zinc, du fer et du manganèse à la composition liquide.

12. Procédé suivant l'une quelconque des revendications 9 à 11, qui comprend en outre l'étape consistant à ajuster le pH de la composition liquide à la valeur d'au moins environ 12,5.

13. Composition produite conformément au procédé suivant l'une quelconque des revendications précédentes.

14. Procédé pour modifier la croissance de plantes, qui consiste à appliquer aux plantes l'une quelconque des compositions suivant la revendication 13 en une quantité efficace pour modifier la croissance des plantes.